(19) Europäisches Patentamt
European Patent Office
Office européen des brevets

(11) **EP 2 575 387 A1**

(12) **EUROPEAN PATENT APPLICATION**

(43) Date of publication:
**03.04.2013 Bulletin 2013/14**

(51) Int Cl.:
*H04W 16/14* $^{(2009.01)}$

(21) Application number: **11250829.6**

(22) Date of filing: **30.09.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **British Telecommunications Public
Limited Company
London EC1A 7AJ (GB)**

(72) Inventor: **The designation of the inventor has not
yet been filed**

(74) Representative: **Chan, Robin et al
BT Group Legal
Intellectual Property Department
PP:C5A, BT Centre
81 Newgate Street
London EC1A 7AJ (GB)**

(54) **Whitespace channel allocation**

(57)    The present invention relates to a system for allocating unused radio frequency spectrum channels with the TV White space frequency band. A spectrum manager is arranged to allocate available white space channels to requesting wireless access point devices. When more than two devices request channels, the spectrum manager determines any mutual interference that may be caused by those devices and allocates channels so as to minimise mutual interference. Where there are more requesting devices than available channels, the spectrum manager is arranged to auction the channels until the demand is equal to the available channels.

Fig. 1

**Description**

The present invention relates to channel allocation and in particular to a method of allocating bandwidth to a plurality of requesting devices.

introduction

In many countries around the world, the use of the radio frequency spectrum is regulated such that particular applications of wireless transmission can only occur within particular frequency ranges. One example range is the 30Mhz to 300Mhz radio frequency range designated as 'very high frequency' (VHF) which is and authorised for early television transmission, digital audio broadcasting and some frequency modulation (FM) radio stations. Another range is the 300Mhz to 3Ghz radio frequency range designated as 'ultra high frequency' (UHF) which is authorised for applications such as analogue and digital television transmission. Such regulation is carried out by organisations such as the Federal Communications Commission (FCC) in the USA and the Office of Communications (Ofcom) in the UK.

As well as regulating new spectrum, one of the regulatory tasks is to reallocate the frequency spectrum to accommodate the phasing out of old transmission technologies in favour of newer more efficient means. One such change is the process of replacing analogue television broadcasting with digital broadcasting techniques. This process, commonly referred to as the Digital Switch Over (DSO), was completed in the USA in June 2009 and is expected to be completed in the UK in 2012.

In the UK, a frequency range of 470Mhz to 862Mhz is currently allocated to analogue television transmission. To minimise the effects of crossover interference of the separate transmissions, the UHF frequency range is divided into a number of non-overlapping sub-ranges called channels. In the UK, this is represented as channels 21 to 69 and an analogue television transmission can be broadcast on a particular channel without causing interference to adjacent channels. After the DSO in the UK, parts of the frequency ranges currently used by analogue TV transmission will become vacant. This is because the content previously transmitted as an analogue signal is now sent as a digital TV transmission which is spectrally more efficient and hence requires less frequency range. These channels are called cleared channels and are now being licensed to other services through national spectrum auctions. Furthermore, after the DSO is complete, at any given location there will be a number of channels which are not used for TV transmission in that area due to frequency planning. This locally unused spectrum is collectively referred to as TV White Space. One proposal is that the TVWS will be allocated for short range data transmission between low-power devices as well as wireless microphones. Low power wireless devices (usually around 100mW-4W EIRP) can therefore in principle operate in these unused channels on a secondary basis without causing interference to the operation of nearby TV broadcast infrastructure. The TWVS spectrum has attracted a lot of interest because the VHF and UHF frequency bands are well suited to many wireless and mobile applications because of good propagation and penetration properties; in particular the UHF radio frequency range is very effective at propagating through walls within buildings.

In the UK the new TV whitespace range will be around 256 MHZ (32 channels) of UHF spectrum dedicated for digital TV transmission and at any location the unused portion of this spectrum will comprise the TVWS spectrum. For comparison, the 3G spectrum range in the UK is nearly half the size at 140 MHz. However, it should be noted that due to the location of the television transmitters and regional grouping of the transmission frequencies used, the amount of TVWS and its frequency decomposition is not constant across the country but will vary from location to location.

An application of the available frequency range resulting from the DSO is to enable short range wireless data transmission between so called White Space Devices (WSDs) which are suited to short distance transmissions. Wireless microphones (WMs) are also being used in this UHF range. Proposals are currently being finalized in both the United States and the UK to regulate the secondary use of the TVWS frequencies by WSDs and similar proposals are also under consideration within the EU. In addition to TV broadcasting services, wireless microphones and other PMSE (Programme Making and Events) equipment are also allowed by regulators to operate in TV bands on a non-interfering basis.

in order to be able to detect TVWS channel availability and avoid causing harmful interference to TV and PMSE, WSD devices are mandated by the US regulator, FCC, and its counterpart in the UK, Ofcom to operate in one of two methods: sensing and geolocation databases. These methods are briefly described below.

*Sensing*

The first method involves using device sensing techniques. In these methods the WSDs have additional functionality to detect TV and WM signals prior to data transmission. A WSD periodically scans all TV channel frequencies. If it doesn't detect a TV or WM signal, then the channels is considered free for use and could be used by the WSD for low power transmission.

However, there are a number of problems with the sensing method. First of all, sensing is a statistical method and is prone to both false negatives and false positives. In the first case, a WSD may mistakenly transmit in a channel that is occupied by TV or WM transmission and therefore can cause harmful interference. In the second case, a WSD mistakenly determines that a particular channel is occupied and by not using that bandwidth, misses a transmission opportunity. To reduce the chance of false negatives the regulators have required that WSD which use sensing should be able to detect even extremely weak signals. However, the complex sensing functionalities that need to be implemented to satisfy regulatory requirements can drive up the cost of devices, as well as causing significant battery drain which is an issue in the case of handheld devices.

*Geolocation databases*

It is also known in the art to use a geolocation database or several such databases (GDB) which contain overall knowledge of the radio spectrum usage in any given area and can tell WSDs which channels are free for use in the vicinity of the requesting WSD. In this method a WSD can determine its location and then sends a request to the geolocation database with this location information. The database has access to information on the location, frequency; transmit power, antenna heights and radiation patterns of all TV transmitters covered by the geolocation database. The database uses this information along with the information received from the WSDs to perform a set of propagation modelling calculations and based on these calculations, requesting WSDs are informed of the available channels at their locations, the maximum transmit power to be used for each channel, and possibly a time validity parameter. Based on this information the WSD then can access one or more TVWS channels using a maximum transmit power that is specified by the GDB.

Unlike sensing which is a stand-alone method, the geolocation database approach requires one or more commercial entities to maintain the database information and provide database services. In the United Sates, there are currently 9 commercial entities, including Google and Microsoft that have been selected by the FCC as designated database providers. In the UK, Ofcom is expected to make a call for proposals for database providers either this year or in 2012.

*Spectrum etiquette*

Most research into the use of geolocation databases for the assignment of TVWS channels has focused on a single device requesting white space spectrum. In reality the provision of commercial services in TVWS by telecommunications operators, for example for future home networks, will involve large numbers of WSDs (for example up to 5000 Wi-Fi access points packed in a dense urban area in London) that may request concurrent access to TVWS. Furthermore, the WSD may belong to different commercial entities, e.g. BT, Virgin Media, Vodafone etc., and may use different access technologies, e.g. the IEEE 802.11af, the Wi-Fi standard that is being developed for TVWS access, or a 4G technology like LTE or WiMAX. A problem arises in how to optimally allocate the TVWS spectrum among a heterogeneous collection of wireless devices that could be mutually interfering.

One approach that is being widely discussed in the literature is the use of spectrum etiquettes. These are a set of rules for radio resource management to be followed by WSDs that share the same spectrum. Spectrum etiquette rules are typically based on actions like dynamic channel selection, transmit power control, adaptive duty cycle and carrier sensing (listen-before-talk). The CSMA/CA approach used in all IEEE 802.11x is the most important example of etiquette protocols.

Spectrum sharing among WSD's using etiquette protocols suffer from a number of shortcomings

- Firstly, they require that different access technologies, e.g. Wi-Fi and LTE, use the same set of etiquette rules in order to make possible sharing between devices using different access technologies. This is currently not the case, i.e. the LTE standard provisions for co-existence among different systems using LTE but not for co-existence between LTE and Wi-Fi or WiMAX.

- Secondly, because spectrum is treated as a "free-for-all" shared resource that any device can access can result in the so-called "tragedy of commons". This problem occurs when self-interested agents pursuing short-term interests deplete a common resource which is available for open access such that the resource becomes unsuitable for all in the long term. We are already seeing serious manifestation of this problem in the case of Wi-Fi (especially in the 2.4 GHz band) where there is a high level of congestion due to interference among different devices that can freely access these bands.

The present invention addresses the above problems.

Statements of invention

In one aspect, the present invention provides a method of allocating radio frequency spectrum for wireless data transmission to a plurality of wireless data transceivers as set out in claim 1.

In another aspect, the present invention provides an apparatus for allocating radio frequency spectrum for wireless data transmission to a plurality of wireless data transceivers as set out in claim 6.

In a further aspect, the present invention provides a method of obtaining radio frequency spectrum for data transmission as set out in claim 11.

In a yet further aspect, the present invention provides a wireless data transceiver as set out in claim 13.

List of Figures

In order to aid understanding of the invention, illustrative embodiments of the present invention will be described with the aid of the accompanying figures in which:

Figure 1 shows an example system for allocating radio frequency spectrum from TVWS according to the first embodiment;

Figure 2 shows the functional components of a geolocation database server illustrated in Figure 1;

Figure 3 is a table showing the information received by the geolocation database from remote sensors or TV transmitters regarding transmission source characteristics;

Figure 4 shows a grid overlay on a geographical region such as the UK to illustrate the pixel regions stored in the geolocation database of Figure 2;

Figure 5 is a table showing the result of processing by the geolocation database to determine the current spectrum usage for each pixel region;

Figure 6 schematically shows the physical components of the White Space Spectrum Manager illustrated in Figure 1;

Figure 7 schematically shows an alternative view of the White Space Spectrum Manager in terms of functional components running on the physical components;

Figure 8 shows sample data stored in the hub table;

Figure 9 show the structure of the allocation table;

Figure 10 schematically shows the physical components of one of the home hubs illustrated in Figure 1;

Figure 11 schematically shows an alternative view of the home hub in terms of the functional components in accordance with the first embodiment.

Figure 12 is a flowchart showing the overall operation of the system illustrated in Figure 1;

Figure 13 schematically shows the format of the broadcast message sent from the White Space Spectrum Manager to home hubs;

Figure 14 is a flowchart showing the general operation of the White Space Spectrum Manager;

Figure 15 is a flowchart showing the auctioning technique used by the White Space Spectrum Manager;

Figure 16 is a flowchart showing the operation of the home hub to request white space channels; and

Figure 17 is a flowchart showing the operation of the home hub when at least one channel is allocated.

Description

*System Overview*

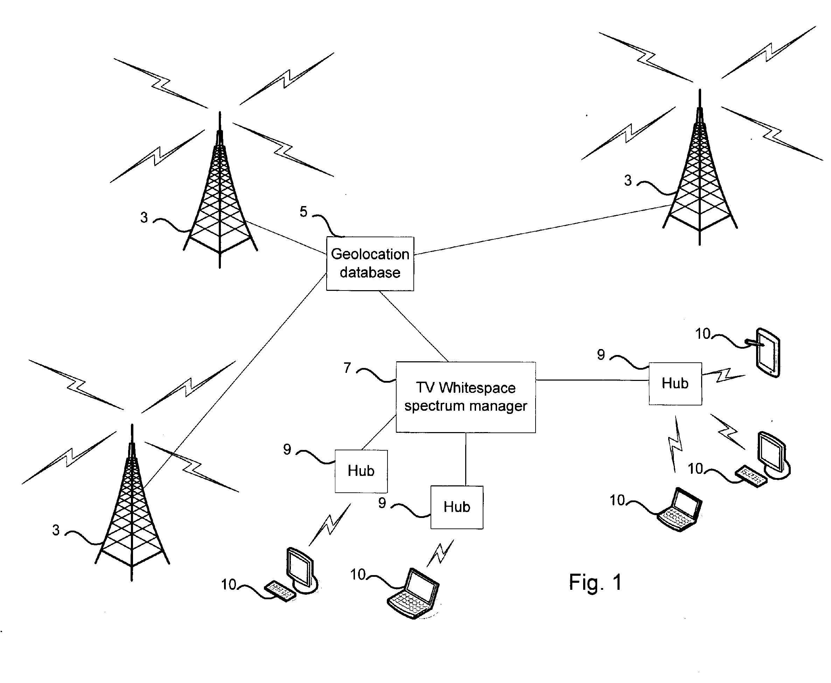

Figure 1 shows the overall system diagram according to a first embodiment. In the example system shown in Figure 1, there are a number of digital TV transmitters 3, each transmitting TV signals on different channels to provide TV coverage within a surrounding broadcasting area. The information regarding each TV transmitter's 3 location, the transmission frequencies and other operation details, such as antenna height etc. are stored in a geolocation database 5. As will described later, the total region covered by the geolocation database 5 is divided into sub-regions hereinafter referred to as pixels. For each pixel, the geolocation database 5 stores information on the number of free channels which are available for data transmission by the WSDs.

Within each pixel region, a TVWS spectrum manager 7 is located to manage use of the White Space spectrum by WSDs. As will be explained later, the spectrum manager 7 is responsible for receiving requests for channels from WSDs, communicating with the geolocation database 5 to determine which channels are available and the auctioning and allocation of channels to WSDs. In this embodiment, the WSDs are a set of wireless access points hereinafter referred to as home hubs (HH) 9 which are located throughout the region. The home hubs 9 can communicate with the TVWS spectrum manager via a wired or wireless link. The HHs 9 have fixed locations during operation and their identities and location are registered with the Spectrum Manager 7 when they are first initialised.

In the embodiment, the home hubs 9 are connected to a WAN such as the Internet using a wired connection such as ADSL or VDSL and also link a number of local clients 10 in a home LAN or WLAN. The home hub 9 is the default gateway within the LAN and therefore clients 10 may request content from the Internet and the retrieved content is delivered over ADSL/VDSL to the home hub which then forwards the packets using the LAN or WLAN. Clients 10 within a LAN can also request local content from other clients on the LAN/WLAN such as from a NAS drive or another computer. The home hub 10 is aware of the total available bandwidth available on the local network and the requirements for transporting the data. The data will typically be transported using 802.11g or 802.11n. As will be described in more detail below, the HHs 9 are also aware that whitespace spectrum is available for use in transferring data between their client devices 10 to supplement or replace the 802.11g/n connection and therefore they can make requests to the spectrum manager 7 for transmission channels. The spectrum manager 7 is responsible for allocating that bandwidth so as to avoid both interference with the existing TV transmitter infrastructure, but also the hubs 9 which are requesting the bandwidth.

*Geolocation database*

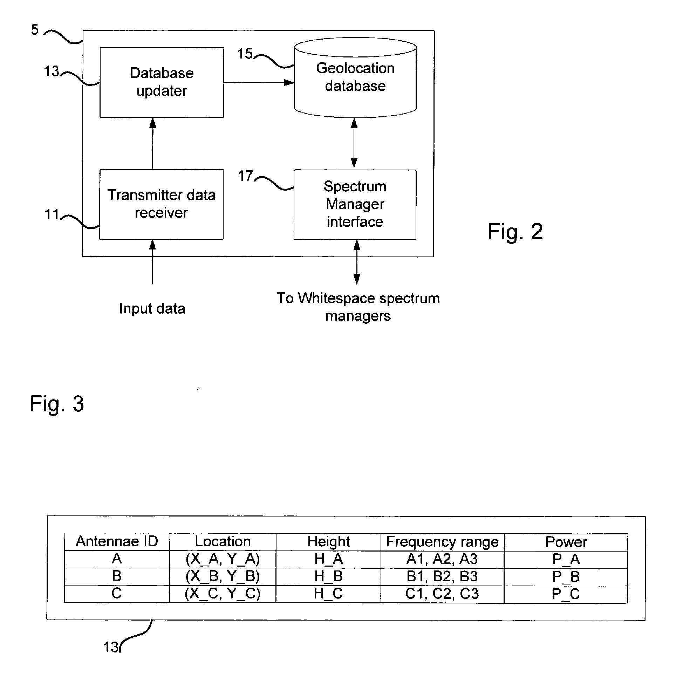

Figure 2 shows in more detail the functional components of the geolocation database 5 illustrated in Figure 1.

In this embodiment the geolocation database 5 is implemented as a server located centrally within a computer network and covering a geographical area such as a country or part of a country such as a city.

The geolocation database 5 contains a transmitter data receiver 11 which provides the geolocation database 5 with information on the TV transmitters 3 within the covered region. The transmitter data comes from the commercial entity which owns the geolocation database 5, sensors located in the covered geographical region or from the TV transmitters 3 themselves. The received data messages are stored in a transmitter data store 12 within a database updater 13 as shown in Figure 3. The geolocation database also receives sensor input on the PMSE transmitters within the covered range, either through sensing or by communicating with a PMSE band manager or database.

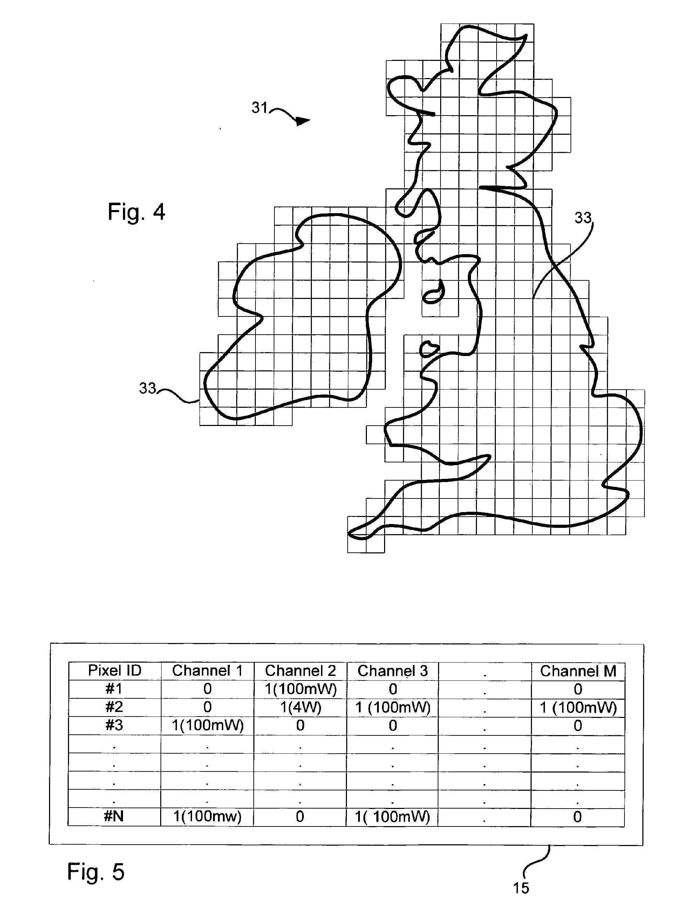

As mentioned earlier, the number of free channels is not constant due to regional interference and transmitter placement, therefore the geolocation database 5 divides the total region into a set of regional pixels. Such an arrangement is shown in Figure 4. In the embodiment, the region is based purely on geographical dimensions but in an alternative, the pixels are created based on potential user density. For example, there would be five regional pixels for a $10km^2$ area of a city whereas only one region pixel for $10km^2$ in countryside.

in order to determine where free channels are available, the database updater 13 analyses the information in the transmitter data store 12, i.e. the location, transmit power, frequency and antenna radiation pattern of all of the TV transmitters 3, along with a set of regulatory protection parameters, to perform a set of propagation modelling-type calculations. The outcome of these calculations are stored in a geolocation data store 15 and each regional pixel entry contains a list of available TVWS channels that could be used accompanied by limits on allowed transmit power powers, and possibly , a time validity parameter for each channel due to possible use by wireless microphones. An example of the geolocation data store 15 is shown in figure 5.

In this embodiment, the database updater 13 runs a simplified algorithm for computation of available channels and maximum allowed transmit power levels. Details of such a scheme are available for example, in the following publication (Maziar Nekovee, Quantifying the availability of TV White Spaces for Cognitive Radio Operation in the UK, Proc. IEEE ICC 2009, available from http://ieeexplore.ieee.org/stamp/stamp.jsp?tp=&arnumber=5208035).

Furthermore, the geolocation database 5 contains a request processor 17. This unit contains a list of all the connected spectrum managers 7 in the pixels.

*White Space spectrum manager*

The TV White Space spectrum manager (SM) is responsible for allocating channels to requesting devices within an associated pixel region. To achieve this it requires awareness of how many devices require channels at any given time, and also the number of available channels in the same instance.

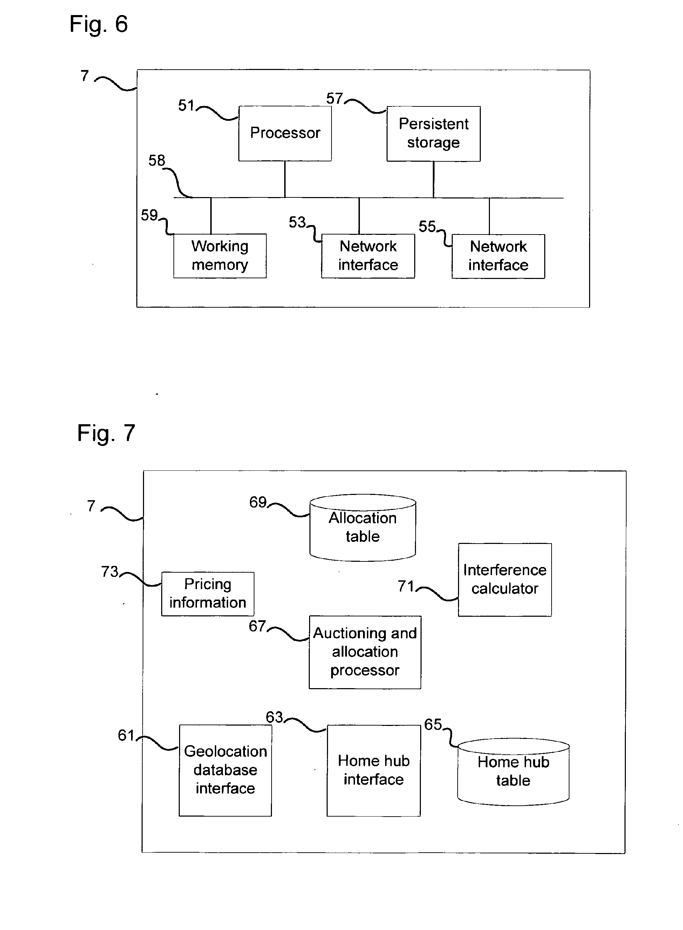

Figure 6 shows the physical components of the TVWS spectrum manger (SM) 7. The SM 7 has a network interface 53 for connection to the geolocation database. A second network interface 55 is also present for communication with home hubs 9 within the regional coverage of the SM 7. A central processor 51 controls the overall operation of the SM 7 and a working memory 59 and persistent data store 57 contain functional data.

When suitable computer program instructions stored in the persistent data store 57 are executed by the processor 51, the operation of the SM 7 can be regarded as a set of functional units formed of a combination of physical components. Figure 7 shows the functional components of the SM 7.

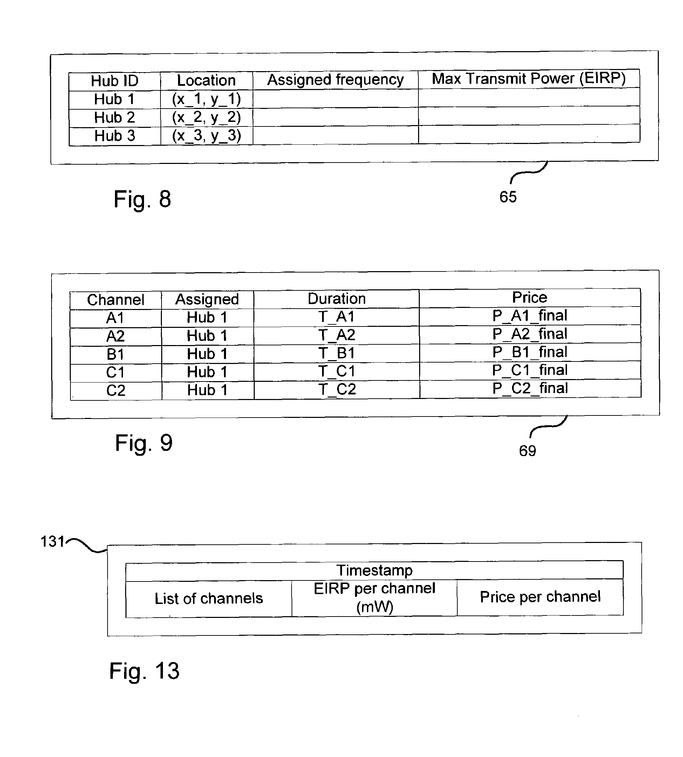

From a functional viewpoint, the SM 7 contains a geolocation database interface 61 connected to the geolocation database 5 for determining which channels in the pixel are free, and a home hub interface 63 for communication with the home hubs 9 for registration, notifying the hubs 9 which channels are free, and notifying the home hubs 9 when they have been allocated channels. Internal processing is handled by an auction and allocation processor 67, an interference calculation unit and a pricing data store. The HHs 9 on initial communication will register their location, and device type, with the SM 7. The data is stored on a home hub data table 65 as shown in Figure 8. The SM 7 periodically receives information on TVWS channel availability from the geolocation database 5 and stores the list of free channels in an allocation data table 75 as shown in Figure 9. This table 75 is also updated with data not available from the geolocation database 5, such as the channels which are not available because they are in use by local devices 10 which were previously allocated channels.

The auction and allocation processor 67 is responsible to combining the information received from the home hub interface 63 with the information received from the geolocation database interface 61 so as to allocate free channels to the home hubs 9. As will be described in more detail below, the SM 7 periodically auctions the available spectrum to the home hubs 9 within their given geographical area. The home hubs 9 may use the channel allocation themselves or distribute the channels to their client devices 10.

The operation of the auction and allocation processor 67 consists of two phases. The auction phase and the assignment phase. The auction phase determines the supply versus demand for channels and attempts to resolve excess demand where necessary through pricing. Once the demand is less than or equal to the supply of free channels, then the assignment phase determines the specific channels that are allocated to the auction winners. This operation will be described in more detail later.

*Home hub*

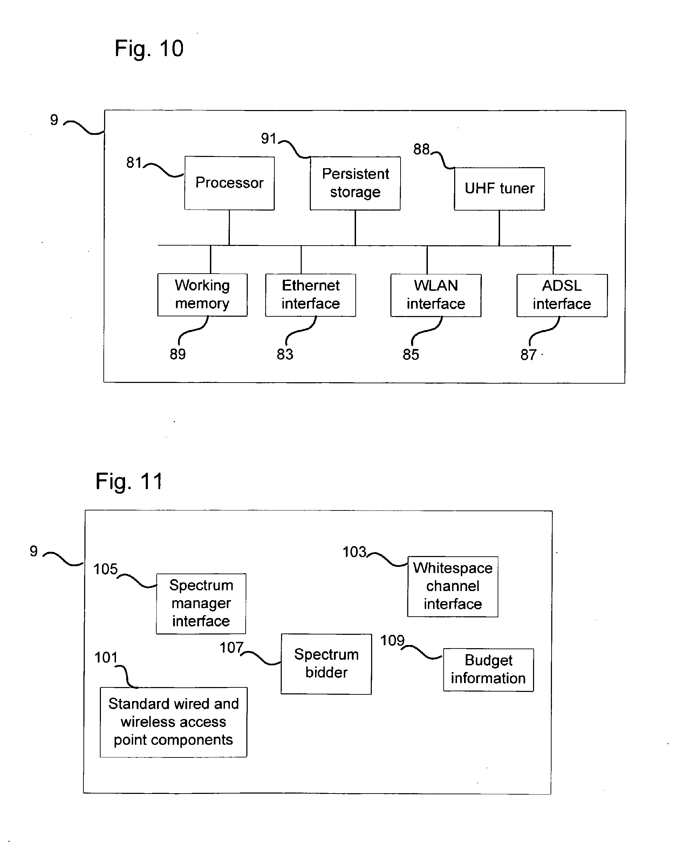

Figure 10 shows the physical components of the home hub 9. It comprises a processor 81, an Ethernet interface 83 and WLAN interface 85, and an ADSL interface. In addition, it has a UHF tuner 88 air interface for example IEEE 802.11af for accessing White Space.

For ease of explanation, Figure 11 shows the functional components of the home hub 9. The hub 9 contains the conventional access point components 101 but also has additional functionalities to bid for TVWS spectrum. The hub 9 has an interface 105 to the SM 7, a UHF tuner 103, a spectrum bidder 107, and memory containing budget information 109. The budget information is inputted via an interface to a pricing server (not shown).

The spectrum bidder 107 is responsible for making a decision on whether to bid for TVWS spectrum, for making bids for channels, and deciding whether or not to continue bidding if there is a price change. These decision are made by the agent based on service requirements from connected client devices 10, the available budget and, possibly, strategic reasoning.

*Overview of the operation*

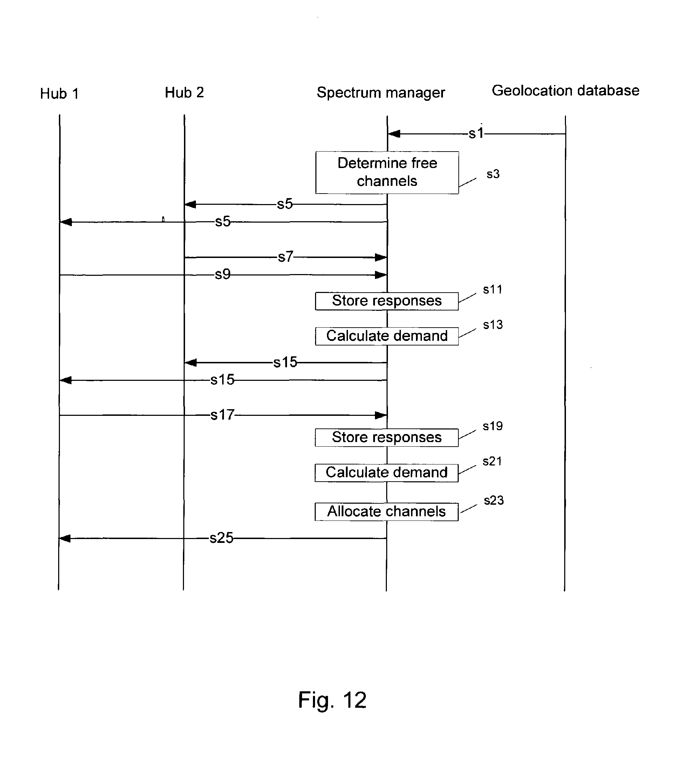

Now that the main system components have been described, the overall operation of the coordinated system will be explained with reference to Figure 12.

In step s1, the geolocation database sends a message to the SM 7. In step s3, the SM 7 stores the information and works out who is registered. Then the auction can begin. At the beginning of auction, the Spectrum Manager broadcasts the available channels to all registered HHs 9 in step s5. The broadcast message 131 shown in Figure 13 contains the number of available channels at the location of HH along with the initial (reserve) price, maximum transmit power to be used and the maximum time validity for each channel. The pricing manager receives the reserve prices for each channel. In this embodiment, the prices for each channel are the same.

After this announcement the Spectrum Manager waits for a fixed period of time (the bidding period) to allow interested HH to bids for the offered spectrum. In step s7 an interested HH 9 sends a message to Spectrum Manager 7 which contains a confirmation of its interest and the number of channels it requires (and possibly a required duration, for simplicity we assume that all HH would require a channel for the maximum duration). In step s9 another home hub 9 sends a similar message. At the end of the bidding period, in step s11 the Spectrum Manager 7 creates a list of all bidding HHs 9 and the number of channels each HH 9 requires. Then in step s13, based on this list and its knowledge of the location of HHs, the Spectrum Manager 7 the work outs if there is excess in demand for the channels offered. If excess is found, the prices of channels are increased. Then in step s15 the spectrum Manager announces the new prices and waits for new bids to arrive. In the flowchart, in step s17 hub 1 renews their bid at the new price but hub 2 does now. Steps s19 and s21 are the same as steps 11 and 13. This process is then repeated until demand equals supply, due to some HH stop bidding due to price increase. It can also happen that due to price increase too many HH's drop their bids such that there is excess supply. In this case the Spectrum Manager decreases the channels prices iteratively until supply and demand match again or the reserve price is reached. Once the price adjustment phase is completed, in step s23 the spectrum manager assigns the available channels to the winners in a way that different channels are assigned to HH which can interfere with each other. In step s25 hub 1 is notified of its channel assignment.

*Spectrum Manager operation*

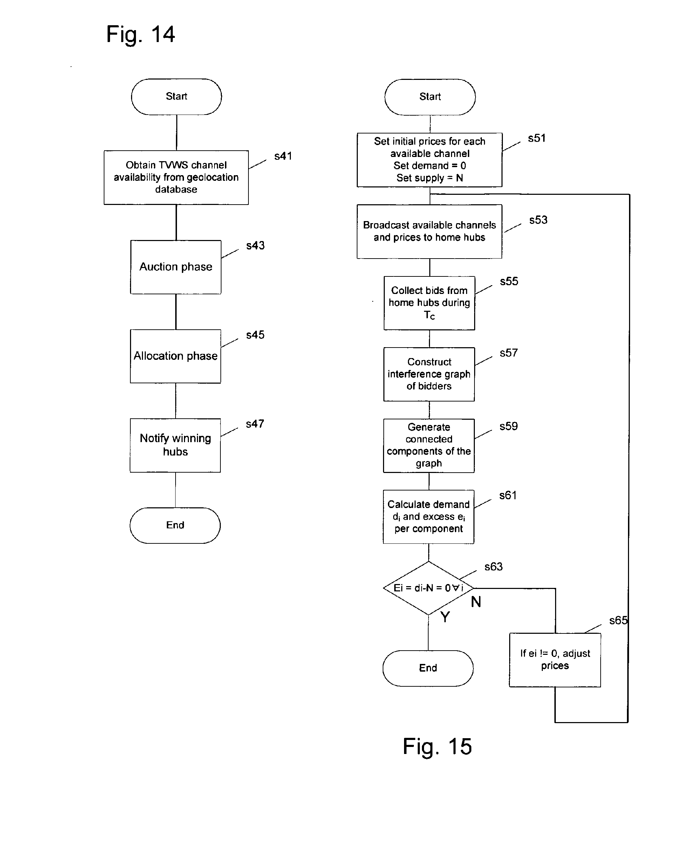

The operation of the spectrum manager will now be described in more detail with reference to Figure 14. In step s41, the SM 7 first receives the channel availability at a given time instance. In step s43, it then initiates an auction phase with any home hubs 9 which are interested in obtaining the right to use white space channels. After this stage, the allocation phase is initiated in step s45 so as to allocate channels to auction winners. Once the price adjustment phase is completed, the spectrum manager assigns the available channels to the winners using a suitable channel assignment algorithm, e.g. branch and bound, or a heuristic like simulated annealing or genetic algorithms. In step s47 the home hubs are notified so that the hubs can begin to transmit on those channels for a specific duration of time and at a specific transmission power.

Fig. 15 shows the flowchart of the auctioning phase described in step s43 of Figure 14 in more detail. In step s51 the auction parameters are initialised. In step s53, the SM 7 broadcasts a message to HHs 9. The message includes a list of available TVWS channels accompanied by the maximum transmit power to be used, a time validity parameter, and the initial (reserve) price. The SM sets the reverse price for each channel based on the information received from the price server; the other information is obtained from GDB.

In step s55, the SM collects bids from HHs during a period T_c as each interested HH's respond with the number of channels it requires.

In step s57, once all bids are collected the SM constructs an interference graph of bidding HH and in step s59 the SM computes all connected components of this graph.

In step s61, for each connected component, i, the SM 7 computes channel demand, $d_i$ using algorithm A1. From this the SM7 then computers the excess demand for that component, $e_i = d_i - M$ , where M is the total number of available channels.

In step s63, the SM checks to see if the excess is equal to the demand or the reserve price is reached. If the excess is not equal, then in step s65 the SM adjusts prices and processing return to step s53 where a new message is broadcast as before but containing new prices. Alternatively, if the excess is equal then the auction processing ends and processing returns to step s45 of Figure 14.

*Further details on interference graph*

A particularly advantageous aspect of the SM 7 processing is that based on the messages received, the SM then constructs an interference graph of the potential interference that would be caused by allocating channels to the requesters before they have even started transmission. This is achieved by first looking up the location of bidding home hubs. If the interference graph indicates that those hubs are neighbours on the graph, then assigning the same channel to them will result in mutual interference and the spectrum manager can take remedial action.

Step s57 of Figure 15 will now be described in more detail. The interference graph consists of a set of vertices that represent the home hubs and a set of edges (links) that connect two vertices. The interference graph is constructed using the interference radius parameter, r_int, an adjustable input parameter of the algorithm. The graph is constructed by creating a bi-directional link is between any two nodes which are within a distance r_int of each other. Two nodes which are connected by a link are called neighbours. The total number of neighbour of a node i is denoted as N_i. For efficiency the interference graph is maintained in the memory using two arrays. The elements of the first array contain the number of neighbours of each node, i.e. element i, contains N_i. The elements of the second array are indices of all the neighbours, i.e. the indices of the neighbours of node i are maintained in the locations N_i-1 to N_i-1+N_i .

*Computing the interference radius*

The interference radius is computed in the following steps. An interference threshold β is defined (this could be for example set to carrier sense threshold of Wi-Fi routers)

Given the maximum transmit power specified by database the interference radius is computed in the following way

Compute the received power from WSD as a function of distance from the pathless model

$$p(r) = p_0 \left( \frac{\lambda}{4\pi r} \right)^{\alpha}$$

, where α is the path loss exponent that can be adjusted depending on outdoor or indoor scenario.

It is 2 for free space and usually between 3-5 for indoor. Further $\lambda$ is the wavelength, which is related to TVWS frequency, f, through the equation

$$\lambda = \frac{c}{f}$$

where c is the speed of light.

The interference distance, r_int, is then computed by solving

$$p(r_{int}) = p_0 \left( \frac{\lambda}{4\pi r_{int}} \right)^{\alpha} = \beta \Rightarrow r_{int} = \frac{\lambda}{4\pi} \left( \frac{\beta}{p_0} \right)$$

Note that the interference distance, r int, depends on wavelength (frequency) so is slightly different for each TVWS frequency. In practice and average value is used for each portion of TVWS frequency (e.g. one value for the 470-550 MHz band and another value for the 614-798 MHz band).

The shadowing and fading effects on signals can be included by amending the power with a stochastic component $\xi$, which has a known probability distribution $f(\xi)$. The power is then given by

$$p(r) = p_0 \left( \frac{\lambda}{4\pi r} \right)^{\alpha} + \xi = p_1(r) + \xi$$

The interference radius, r_int, is then obtained by numerically solving the equation

$$F(p_1(r_{int}) + \xi) = \varepsilon$$

where F is the cumulative distribution function, and $\varepsilon$ is an input parameter of the algorithm. For example, if $\xi$ has a log-normal distribution with variance $\sigma$, then r_int is computed by numerically solving

$$\frac{1}{2} - \frac{1}{2} erf \left( \frac{10\alpha}{\sqrt{2}\sigma} \log_{10} \frac{r_{int}}{r_{int}^0} \right) = 1 - \varepsilon$$

where *erf* is the error function.

*Channel demand*

The processing of step s59 will now be described in more detail. A connected component of the graph is a collection of all nodes where starting from a randomly chosen node every other randomly chosen node can be reached through a finite number of hops on the graph. A standard flooding algorithm is used to compute all connected components of the graph.

The channel demand per connected component is the minimum number of channels which are required to achieve a non-interfering channel assignment to all nodes in that component. In the case that each node (home hub) requires only one channel, finding the demand value is equivalent to the graph colouring problem. Generally, a HH may require more than one channel so satisfy its bandwidth demand (e.g. for HDTV streaming), and in this case computation of demand is equivalent to partial graph colouring problem. The processing time required to solve the exact colouring problem increases exponentially with the number of nodes and so does not offer a feasible solution for the auction problem since it has to be computed iteratively every time a new auction round starts. To overcome this problem in this invention we have developed a fast algorithm that computes an upper bound for channel demand. The working of this algorithm is explained below.

The algorithm starts by assigning priorities to nodes within a connected component, which determines the order that nodes are assigned a channel. The nodes are prioritised according to their coordinates $(x\_i,y\_i)$ with a node with a lower $x\_i$ being assigned a higher priority (if two nodes have the same value of $x\_i$, then they are randomly prioritised with respect each other). After nodes are prioritised they are processed as follows. Starting with node with the highest priority, say node j, that node is assigned its requested $m\_j$ channels, $c\_1, c\_2, ..c\_j$, the next priority node, k, is then processed which requires $m\_k$ channels. If this node is a neighbour of j on the interference graph, then it is assigned channels $c\_j+l, c\_j+2, ..c\_j+m\_k$ to avoid interference, otherwise it is assigned overlapping channels with i, starting from $c\_1$. This process is repeated until all nodes in the component are assigned a channel. Defining a channel allocation vector $C\_i[k]$ for each node, with $C\_i[k]=1$ if channel k is assigned to node i and zero otherwise, the channel assignment vector of the component is obtained from

$$C = C_1 \otimes C_2 ... C_M$$

where $\otimes$ denotes the logical OR operation between two vectors. The total number of required channels for the component, which is equal to the channel demand for that component, is then computed from

$$d_i = \sum_{k=1} C[k]$$

The excess demand for the connected component is then computed from

$$e_i = d_i - M$$

*Price adjustment*

In step s65, the prices are adjusted when the excess is not equal to the demand. In particular, the prices may need to be raised or lowered. The processing in each case is set out below.

*Price increase*

In a case where the hubs have requested more channels than are available, the price must be increased in the manner described below.

Once the channel demand and excess is obtained for each component the asking price per channel at the next auction round, t+1, is computed from the formula below (for notation simplicity the component index is omitted)

$$p_{t+1} = p\_t + \alpha f(e_t)\ .$$

Here p_t is the price per channel at round t, alpha (O<alpha<l) is an adjustable parameter that determines the aggressiveness in price increase , e_t is excess demand at round t and f is a function which is monotonically increasing and satisfies f(0)=0, f(infinity)=1. In the current implementation we have used

$$f(e_t) = \frac{e_t}{e_t + 1}$$

The optimal value of parameter alpha could in principle be learned, for example based, on historic data that is stored by SM on previous auctions.

*Price decrease*

In contrast, if demand becomes less than supply at an auction round, then the auctioneer need to reduce the asking price in order regain demand. The SM uses the following formula to decrease price

$$p_{t+1} = p\_t - \frac{p_t - p_a}{2}$$

Here p_a is the price at the most recent round with positive excess demand. The term p_t-p_a is used in the algorithm to cap the decrease in asking price such that the decreased price is never below a previously accepted price.

*Home hub operation*

The general processing of the home hub is to ensure that they can meet the bandwidth requirements of their connected clients 11. In cases where the bandwidth provided by Wi-Fi and Ethernet/Powerline Ethernet is not sufficient, the home hubs can request TVWS channels to supplement the local network. To ensure fairness between hubs, each hub has a finite number of tokens with which to bid for TVWS channels. Bidding can occur if the hub can "afford" the price of the channel. When a channel is contended, then the price will increase and the hub must decide whether to increase its bid to obtain the channel, but will subsequently be less likely to win future bids. In this embodiment, the tokens are replenished once a day.

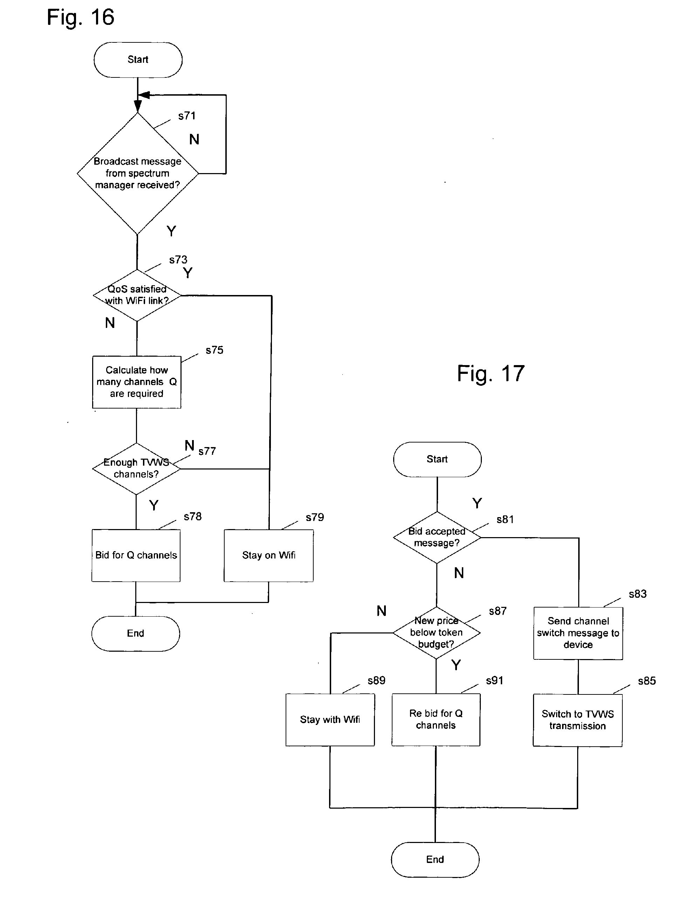

Figures 15 and 16 show the flowchart of the decision making mechanism inside a home hub.
In step s71 the hub 9 checks if a broadcast message has been received from the spectrum manager with availability information on TVWS channels. If not, then it does nothing (stays with Wi-Fi) . If a message has been received, then in step s73 the hub 9 checks if the Wi-Fi link quality and bandwidth is sufficient for the application that is running (e.g. voice, video, HDTV, data). If Wi-Fi is sufficient then processing end. However, if not, the in step s75 the hub 9 calculates how many channels it would require to meet the quality of service. In step s77 the hub compares the calculated demand against the available number of channels. If there are not enough channels, then in step s79 the hub decides to stay on Wi-Fi only. If there are enough channels, and the pricing is available, then in step s78, the hub generates a bid message to the spectrum manager.
In step s81 the hub 9 receives a response from the spectrum manager and it determines whether the bid was successful. If it was, then in step s83 the hub sends a switch channels message to end-user device with the details of TVWS channels to switch to (frequencies, transmit power, possibly modulation to be used). In step s85 it then switches to TVWS channels.
If bid is not accepted, then in step s87 the hub checks if there is enough token budget to make a new bid. If there is, then in step s91 a new bid is made. If not, in step s89 the hub continues to use Wi-Fi.

Alternatives and modifications

In the embodiment, the prices for channels were fixed. However, it is recognised that some frequencies will be more desirable than others. Since the UHF band covers such a large space, certain frequencies could be more suited to propagation through walls and other obstacles. Also, the maximum allowed transmit power could vary from channel to channel. In an alternative, the spectrum manager divides the available channels into a number of classes, based on frequency and transmission power (for example channels belonging to the 470-550 MHz may form class A while channels belonging to the 614-798 MHz may form class B). The reserve price for each class is different between classes so that more desirable classes of channel will be more highly contended. The auctioning mechanism then proceeds as before but HHs will not only specify how many channels they require but also specify the channel class or even specific channels. The spectrum manager then calculates the demand separately for each class and adjusts the channel price for each class separately.

Furthermore, if maximum transmit powers per channels are different, then the resulting interference graph is a directed graph (i.e. links are asymmetric). This has the knock on effect that some channels will have a higher price.

In the embodiment, the tokens for channel bidding are stored at the home hubs so that they can decide whether or not to continue bidding for channels when the price changes. In an alternative, the tokens are stored at the spectrum manager. This reduces the risk of abuse by hubs being modified to constantly being able to bid for channels.

In the embodiment, the tokens are replenished once a day to the maximum amount. In an alternative, the tokens are replenished at a rate, for example, a token every hour so that there is more flexibility in bidding by each hub. In a further alternative the number of tokens can be supplemented by user payment to increase the likelihood of winning the channel assignment.

In the embodiment, the SM notifies the hubs of the channels that are available. In an alternative, the service manager does not send such a message and simply waits for home hubs to request TV whitespace before determining whether there are any available channels for allocation.

**Claims**

1. A method of allocating radio frequency spectrum for wireless data transmission to a plurality of wireless data transceivers, the radio frequency spectrum being grouped into sub-ranges, the method comprising:

receiving requests from at least two wireless data transceivers, each request indicating an amount of desired radio frequency spectrum bandwidth for data transmission;
determining the potential interference that would be caused by the at least two wireless data transceivers being allocated radio frequency spectrum; and
allocating sub-ranges of radio frequency spectrum to the at least two wireless data transceivers in dependence upon the determined mutual interference.

2. A method according to claim 1, further comprising receiving data relating to the number of available sub-ranges of radio frequency spectrum from a remote database.

3. A method according to claim 2, further comprising sending each wireless data transceiver a list containing the groups of sub ranges.

4. A method according to any preceding claim wherein the potential interference is determined based on the relative locations of the at least two wireless data transceivers.

5. A method according to any preceding claim, further comprising associating a price with each sub-range of radio frequency spectrum and auctioning each sub-range to said at least two wireless data transceivers.

6. Apparatus for allocating radio frequency spectrum for wireless data transmission to a plurality of wireless data transceivers, the radio frequency spectrum being grouped into sub-ranges, the apparatus comprising:

a receiver for receiving requests from at least two wireless data transceivers, each request indicating an amount of desired radio frequency spectrum bandwidth for data transmission;
an interference calculating means for determining the potential interference that would be caused by the at least two wireless data transceivers being allocated radio frequency spectrum; and
allocation means for allocating sub-ranges of radio frequency spectrum to the at least two wireless data transceivers in dependence upon the determined mutual interference.

7. Apparatus according to claim 6, further comprising a second receiver for receiving data relating to the number of available sub-ranges of radio frequency spectrum from a remote database.

8. Apparatus according to claim 7, further comprising sending means for sending each wireless data transceiver a list containing the groups of sub ranges.

9. Apparatus according to any of claims 6 to 8 wherein the potential interference is determined based on the relative locations of the at least two wireless data transceivers.

10. Apparatus according to any of claims 6 to 9, further comprising auctioning means for associating a price with each sub-range of radio frequency spectrum and auctioning each sub-range to said at least two wireless data transceivers.

11. A method of obtaining radio frequency spectrum for data transmission, the radio frequency spectrum being divided into a set of sub-ranges, the method comprising:

sending a request for a number of sub-ranges of radio frequency spectrum to a spectrum allocator;
receiving notification that at least one sub-range of radio frequency spectrum has been allocated; and
transmitting data within the allocated radio frequency spectrum sub-range.

12. A method according to claim 11, wherein each sub-range of radio frequency spectrum has a price, and further comprising:

determining whether a sufficient number of tokens are present to enable a request for a sub range of radio frequency spectrum to be made.

13. A wireless data transceiver comprising:

a radio frequency tuner;
a requester for requesting a number of sub-ranges of radio frequency spectrum from a spectrum allocator;
a receiver for receiving notification that at least one sub-range of radio frequency spectrum has been allocated; and
wherein the radio frequency tuner is operable to transmit data within the allocated radio frequency spectrum sub-range.

14. A wireless data transceiver according to claim 13, wherein each sub-range of radio frequency spectrum has a price, and further comprising:

a token store; and
determining means for determining whether a sufficient number of tokens are present in the store to enable a request for a sub range of radio frequency spectrum to be made.

Fig. 1

**Fig. 2**

Database updater

13

Geolocation database

15

Transmitter data receiver

11

Spectrum Manager interface

17

Input data

To Whitespace spectrum managers

5

**Fig. 2**

**Fig. 3**

| Antennae ID | Location | Height | Frequency range | Power |
|---|---|---|---|---|
| A | (X_A, Y_A) | H_A | A1, A2, A3 | P_A |
| B | (X_B, Y_B) | H_B | B1, B2, B3 | P_B |
| C | (X_C, Y_C) | H_C | C1, C2, C3 | P_C |

13

31

Fig. 4

33

33

Fig. 5

| Pixel ID | Channel 1 | Channel 2 | Channel 3 | . | Channel M |
|----------|-----------|-----------|-----------|---|-----------|
| #1 | 0 | 1(100mW) | 0 | . | 0 |
| #2 | 0 | 1(4W) | 1 (100mW) | . | 1 (100mW) |
| #3 | 1(100mW) | 0 | 0 | . | 0 |
| . | . | . | . | . | . |
| . | . | . | . | . | . |
| . | . | . | . | . | . |
| . | . | . | . | . | . |
| #N | 1(100mw) | 0 | 1( 100mW) | . | 0 |

15

## Fig. 6

7

51 — Processor

57 — Persistent storage

58

59 — Working memory

53 — Network interface

55 — Network interface

## Fig. 7

7

69 — Allocation table

73 — Pricing information

71 — Interference calculator

67 — Auctioning and allocation processor

61 — Geolocation database interface

63 — Home hub interface

65 — Home hub table

| Hub ID | Location | Assigned frequency | Max Transmit Power (EIRP) |
|--------|----------|--------------------|---------------------------|
| Hub 1 | (x_1, y_1) | | |
| Hub 2 | (x_2, y_2) | | |
| Hub 3 | (x_3, y_3) | | |

65

## Fig. 8

| Channel | Assigned | Duration | Price |
|---------|----------|----------|-------|
| A1 | Hub 1 | T_A1 | P_A1_final |
| A2 | Hub 1 | T_A2 | P_A2_final |
| B1 | Hub 1 | T_B1 | P_B1_final |
| C1 | Hub 1 | T_C1 | P_C1_final |
| C2 | Hub 1 | T_C2 | P_C2_final |

69

## Fig. 9

131

| Timestamp | | |
|-----------|--|--|
| List of channels | EIRP per channel (mW) | Price per channel |

## Fig. 13

## Fig. 10

## Fig. 11

Hub 1          Hub 2          Spectrum manager          Geolocation database

Fig. 12

# Fig. 14

```
        Start

        s41
Obtain TVWS channel
availability from geolocation
database

        s43
Auction phase

        s45
Allocation phase

        s47
Notify winning
hubs

        End
```

```
        Start

Set initial prices for each      s51
available channel
Set demand = 0
Set supply = N

Broadcast available channels     s53
and prices to home hubs

Collect bids from        s55
home hubs during
Tc

Construct                s57
interference graph
of bidders

Generate                 s59
connected
components of the
graph

Calculate demand         s61
di and excess ei
per component

        s63
Ei = di-N = 0∀i      N

        Y

        End

If ei != 0, adjust       s65
prices
```

## Fig. 15

## Fig. 16

```
        ┌─────────┐
        │  Start  │
        └─────────┘
             │
             ▼
          s71    ◄──────────┐
          ╱╲              N │
         ╱  ╲               │
        ╱Broad-╲ ───────────┘
       ╱ cast    ╲
      ╱ message   ╲
      ╲ from       ╱
       ╲ spectrum ╱
        ╲manager  ╱
         ╲recvd? ╱
          ╲  ╱
           ╲╱
           Y│
            ▼
         s73        Y
         ╱╲ ──────────────────┐
        ╱  ╲                  │
       ╱ QoS ╲                │
      ╱satisfied╲             │
      ╲with WiFi ╱            │
       ╲ link? ╱              │
        ╲ ╱                   │
        N│                    │
         ▼                    │
    ┌──────────┐   s75        │
    │Calculate how│           │
    │many channels Q│         │
    │are required │           │
    └──────────┘              │
         │                    │
         ▼     N  s77         │
         ╱╲ ──────────────────┤
        ╱  ╲                  │
       ╱Enough╲               │
      ╱ TVWS   ╲              │
      ╲channels?╱             │
        ╲ ╱                   │
        Y│                    │
         ▼   s78          s79 │
    ┌─────────┐      ┌──────────┐
    │Bid for Q│      │Stay on   │
    │channels │      │Wifi      │
    └─────────┘      └──────────┘
         │                │
         └────────┬───────┘
                  ▼
             ┌─────────┐
             │   End   │
             └─────────┘
```

## Fig. 17

```
        ┌─────────┐
        │  Start  │
        └─────────┘
             │
             ▼       Y
          s81  ╱╲ ──────────────┐
              ╱  ╲               │
             ╱ Bid ╲             │
            ╱accepted╲           ▼
            ╲message?╱      s83 ┌──────────┐
             ╲ ╱              │Send channel│
             N│               │switch message│
              ▼               │to device   │
     N    s87 ╱╲              └──────────┘
    ┌────────╱  ╲                  │
    │       ╱ New ╲                ▼
    │      ╱ price  ╲         s85 ┌──────────┐
    │      ╲below token╱        │Switch to  │
    │       ╲budget? ╱          │TVWS       │
    │        ╲ ╱                │transmission│
    │        Y│                 └──────────┘
    ▼   s89    ▼   s91               │
┌─────────┐  ┌─────────┐             │
│Stay with│  │Re bid for│            │
│Wifi     │  │Q channels│            │
└─────────┘  └─────────┘             │
    │            │                   │
    └────────────┼───────────────────┘
                 ▼
            ┌─────────┐
            │   End   │
            └─────────┘
```

Europäisches
Patentamt

European
Patent Office

Office européen
des brevets

# EUROPEAN SEARCH REPORT

Application Number

EP 11 25 0829

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>Y | US 2010/255794 A1 (AGNEW CARSON E [US])<br>7 October 2010 (2010-10-07)<br>* abstract *<br>* paragraph [0002] - paragraph [0014] *<br>* paragraph [0024] - paragraph [0040] *<br>* paragraph [0044] - paragraph [0062] *<br>* paragraph [0065] - paragraph [0108] *<br>----- | 1-4,6-9,<br>11,13<br>5,10,12,<br>14 | INV.<br>H04W16/14 |
| X<br><br>Y<br><br>A | US 2008/108365 A1 (BUDDHIKOT MILIND M [US]<br>ET AL) 8 May 2008 (2008-05-08)<br>* abstract *<br>* paragraph [0002] - paragraph [0005] *<br>* paragraph [0016] - paragraph [0019] *<br>* paragraph [0023] - paragraph [0028] *<br>* paragraph [0031] - paragraph [0064] *<br>* paragraph [0086] - paragraph [0098] *<br>----- | 1,6,11,<br>13<br>5,10,12,<br>14<br>2-4,7-9 | |
| A | US 2004/165549 A1 (BACKES FLOYD [US] ET<br>AL) 26 August 2004 (2004-08-26)<br>* abstract *<br>* paragraphs [0002], [0003] *<br>* paragraph [0067] - paragraph [0071] *<br>* paragraph [0095] - paragraph [0104] *<br>* paragraph [0119] - paragraph [0122] *<br>* paragraph [0176] - paragraph [0182] *<br>----- | 1-14 | TECHNICAL FIELDS<br>SEARCHED (IPC)<br><br>H04W |
| A | US 2005/202824 A1 (GOLDHAMMER MARIANNA<br>[IL] GOLDHAMER MARIANA [IL])<br>15 September 2005 (2005-09-15)<br>* abstract *<br>* paragraphs [0004], [0005] *<br>* paragraph [0012] - paragraph [0045] *<br>----- | 1-4,6-9,<br>11,13 | |

The present search report has been drawn up for all claims

| Place of search | Date of completion of the search | Examiner |
|---|---|---|
| Munich | 17 February 2012 | Biyee, Nicole |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
...........................................................................
& : member of the same patent family, corresponding
document

EPO FORM 1503 03.82 (P04C01)

**ANNEX TO THE EUROPEAN SEARCH REPORT**
**ON EUROPEAN PATENT APPLICATION NO.**                    EP 11 25 0829

This annex lists the patent family members relating to the patent documents cited in the above-mentioned European search report.
The members are as contained in the European Patent Office EDP file on
The European Patent Office is in no way liable for these particulars which are merely given for the purpose of information.

17-02-2012

| Patent document cited in search report | | Publication date | Patent family member(s) | | Publication date |
|---|---|---|---|---|---|
| US 2010255794 | A1 | 07-10-2010 | CA | 2757959 A1 | 14-10-2010 |
| | | | EP | 2417720 A1 | 15-02-2012 |
| | | | US | 2010255794 A1 | 07-10-2010 |
| | | | WO | 2010117965 A1 | 14-10-2010 |
| US 2008108365 | A1 | 08-05-2008 | NONE | | |
| US 2004165549 | A1 | 26-08-2004 | NONE | | |
| US 2005202824 | A1 | 15-09-2005 | CA | 2500246 A1 | 11-09-2005 |
| | | | IL | 160832 A | 11-02-2009 |
| | | | US | 2005202824 A1 | 15-09-2005 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MAZIAR NEKOVEE.** Quantifying the availability of TV White Spaces for Cognitive Radio Operation in the UK. *Proc. IEEE ICC,* 2009, http://ieeexplore.ieee.org/stamp/stamp.jsp?tp=&arnumber=5208035